# EUROPÄISCHE PATENTSCHRIFT

(11) **EP 2 882 672 B1**
(45) Veröffentlichungstag und Bekanntmachung des Hinweises auf die Patenterteilung: **12.10.2016**
(21) Anmeldenummer: 13748008.3
(22) Anmeldetag: 06.08.2013
(51) Int. Cl.: B65G 47/51, B65G 47/64

(54) **PRODUKTFLUSS-REGULATOR**
PRODUCT-FLOW REGULATOR
RÉGULATEUR DE FLUX DE PRODUITS

(30) Priorität: 07.08.2012 CH 12932012
(43) Veröffentlichungstag der Anmeldung: 17.06.2015
(73) Patentinhaber: Rotzinger AG, 4303 Kaiseraugst (CH)
(72) Erfinder: PHILIPP, Kurt, 79639 Grenzach-Wyhlen (DE); BACKHAUS, Daniel, CH-8852 Altendorf (CH)
(74) Vertreter: Braun, André jr.
(86) Internationale Anmeldenummer: PCT/EP2013/066479
(87) Internationale Veröffentlichungsnummer: WO 2014/023730

(56) Entgegenhaltungen:
- WO-A1-2008/095861
- FR-A- 1 234 974
- FR-A1- 2 924 104
- JP-A- H0 266 020
- US-A- 3 050 200

## Beschreibung

Die Erfindung betrifft ein Verfahren zum Entkoppeln eines ankommenden Flusses von Stückgutprodukten von einer nachgeordneten Einrichtung zur weiteren Behandlung nach dem Oberbegriff des Anspruchs 1 und einen Produktfluss-Regulator gemäss dem Oberbegriff des Anspruchs 6 zur Durchführung des Verfahrens.

Solche Verfahren und Produktfluss-Regulatoren sind bekannt und kommen beispielsweise zwischen einer Produktionseinrichtung und einer Verpackungseinrichtung zum Einsatz. Üblicherweise wird eine Verpackungseinrichtung so ausgelegt, dass sie eine Verpackungsleistung besitzt, die höher ist als der Ausstoss der Produktionseinrichtung, um Produktstau und damit verbundene Betriebsstörungen zu vermeiden. Falls aber bei der Verpackungseinrichtung eine Betriebsunterbrechung auftritt, kann zwar die Produktionseinrichtung abgeschaltet werden, was aber häufig nur mit einer erheblichen Verzögerung möglich ist, weil die im Fertigungsprozess befindlichen Produkte auf jeden Fall noch aus der Produktionseinrichtung ausgetragen werden müssen. Die Folge wäre ein Produktstau und im Falle einer Nahrungsmittelproduktion auch häufig Ausschuss. Deshalb werden bei solchen Produktflüssen Massnahmen getroffen, um den beispielsweise von einer Produktionseinrichtung kommenden Produktfluss von dem einer Verpackungseinrichtung zugeführten Produktfluss zu entkoppeln.

Produktfluss-Regulatoren dieser Art besitzen üblicherweise einen Zwischenspeicher, in welchem die Produkte für eine bestimmte Zeitspanne zwischengelagert werden, sowie Eintragsvorrichtungen zum Eintrag der ankommenden Produkte in den Zwischenspeicher und Austragsvorrichtungen zur Entnahme der Produkte aus dem Zwischenspeicher und deren Weiterleitung.

Die bekannten Zwischenspeicher besitzen eine Vielzahl von Ablageflächen, auf welchen die Produkte abgelegt werden und von denen sie nach einer vorgesehenen Zeitspanne wieder entnommen werden. Die Zwischenspeicher können entweder so ausgebildet sein, dass die Ablageflächen bewegt sind und zu den Ein- und Austragsvorrichtungen herangeführt werden, beispielsweise in der Art der bekannten Kettenspeicher, bei denen an Ketten hängende Gondeln mehrere übereinander angeordnete Ablageflächen aufweisen.

Die Zwischenspeicher können auch so ausgelegt sein, dass die Ablageflächen feststehend sind und die Produkte mittels eines Elevators von der Ebene, auf der sie ankommen, zu der Ebene gebracht werden, auf der sie zwischengespeichert werden, bzw. von den Zwischenspeicherebenen abgeholt und auf das Niveau der Weiterleitung gebracht werden.

Für beide Formen von Zwischenspeichern müssen die in gleichmässigem Fluss ankommenden Produkte zu Formationen gruppiert werden, zwischen denen ein für die Bewegung des Speichers oder des Elevators ausreichender Abstand gebildet wird. Die dafür geeigneten Massnahmen sind aus dem Stand der Technik ebenfalls bekannt.

JP 02066020 beschreibt ein gattungsgemäßes System.

Trotz laufend erfolgender Optimierungen der konstruktiven Lösungen wie auch der Steuerungen, sind die bekannten Produktfluss-Regulatoren den künftig weiter steigenden Anforderungen an Verarbeitungsgeschwindigkeit nicht mehr gewachsen. Der Erfindung liegt daher die Aufgabe zugrunde, die Ein- und Austragsgeschwindigkeiten von Produktfluss-Regulatoren derart zu steigern, dass sie auch künftigen Anforderungen genügen.

Erfindungsgemäss wird dies durch die kennzeichnenden Merkmale der Ansprüche 1 und 6 erreicht.

Unter anderem kann durch die dem einlaufseitigen Elevator vorgeschaltete erfindungsgemässe Puffereinrichtung ermöglicht werden, dass die Zeitspanne, während welcher die Puffereinrichtung gefüllt wird, dem einlaufseitigen Elevator für den vertikalen Transport, die Übergabe der Produkte an den Zwischenspeicher und die Rückkehr zur Verfügung steht. Dadurch kann eine Vorpüfferfunktion realisiert werden, welche eine Erhöhung der Arbeitskadenz des einlaufseitigen Elevators und damit eine Vergrösserung des Produktdurchsatzes ermöglicht.

Zusätzlich ermöglicht die Übergabe der Produkte von der dem einlaufseitigen Elevator vorgeschalteten Puffereinrichtung auf mehreren unterschiedlichen Höhen an den einlaufseitigen Elevator, dass der einlaufseitige Elevator beim Beladen weniger Hubhöhe zurücklegen muss, wodurch ein Zeitgewinn entstehen kann, der zu einer Erhöhung des Durchsatzes genutzt werden kann.

Bevorzugt ist dem auslaufseitigen Elevator ebenfalls eine analoge Puffereinrichtung nachgeschaltet, womit entsprechende Effekte und Vorteile erreicht werden können.

Die Puffereinrichtungen können beispielsweise Elevatoren sein. Alternativ dazu können sie ortsfest sein, wobei sie dazu mehrere in der Höhe ortsfeste Ebenen und eine Verteileinrichtung umfassen können.

Im Folgenden wird anhand der beiliegenden Zeichnungen ein Produktfluss-Regulator in einer Fertigungsanlage für unverpackte Biskuits, oder dergl. als bevorzugtes Ausführungsbeispiel der Erfindung beschrieben. Es zeigen:
- Fig. 1: eine schematische Darstellung eines Produkt-fluss-Regulators in Seitenansicht und Draufsicht
- Fig. 2: ein entsprechender Produktfluss-Regulator mit zwei Elevatorebenen
- Fig. 3: ein entsprechender Produktfluss-Regulator mit vier Elevatorebenen
- Fig. 4: eine Ausführungsform mit alternativem Produktein- und -auslauf

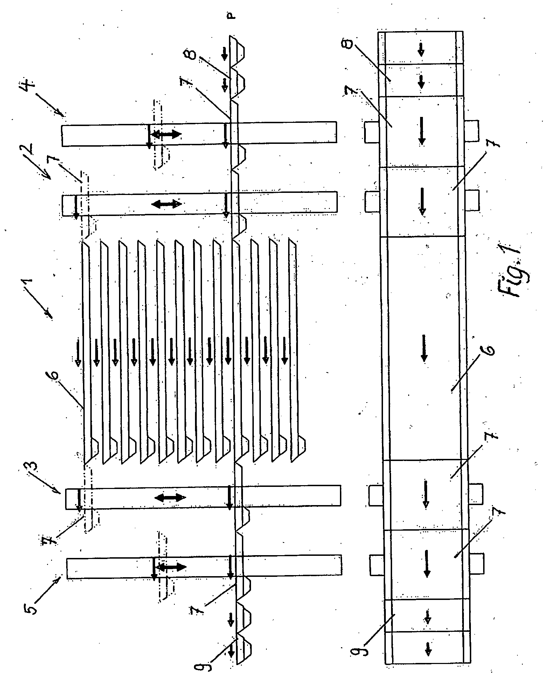

Der in Fig. 1 gezeigte Produktfluss-Regulator für eine Produktionsanlage für Produkte P (Biskuits) umfasst einen Zwischenspeicher 1, einen einlaufseitigen Elevator 2 und einen auslaufseitigen Elevator 3. Zusätzlich ist in Transportrichtung gesehen vor dem einlaufseitigen Elevator ein zusätzlicher Elevator 4 angeordnet, der eine nachfolgend näher beschriebene Pufferfunktion bewirkt. Entsprechend ist nach dem auslaufseitigen Elevator 3 ein Pufferelevator 5 angeordnet.

Der Zwischenspeicher besitzt eine Anzahl von übereinander angeordneten Ablageebenen für die Produkte P. Die Ablageebenen bestehen aus Förderbändern 6, die für die Produktübergabe vom einlaufseitigen Elevator 2 intermittierend, d.h. jeweils für die Dauer der Übergabe einer auf dem Elevator befindlichen Produktgruppe, laufen und, wenn sie gefüllt sind, ggf. für eine vorgesehene Zeitspanne der Zwischenspeicherung ruhen. Der Austrag der Produkte erfolgt in gleicher Weise in umgekehrter Reihenfolge, d.h. es werden intermittierend Produktgruppen an den auslaufseitigen Elevator 3 abgegeben, bis das betreffende Förderband leer ist.

Die Ablageflächen der Elevatoren stellen Transportebenen dar, die ebenfalls aus Förderbändern 7 bestehen und die jeweils für die Produktübernahme und für die Produktabgabe synchron mit den vor- oder nachgeschalteten Bändern laufen und während des vertikalen Transports ruhen. In den Zeichnungen sind die Ablageebenen bzw. Förderbänder 7 der Elevatoren jeweils in zwei vertikalen Positionen gezeigt, nämlich in einer Übernahmeposition und einer Übergabeposition.

Der einlaufseitige Pufferelevator 4 übernimmt die Produkte von den Bändern 8, welche die Produkte anliefern und in bekannter Weise zu Formationen gruppieren. Die Zeitspanne, während welcher der Pufferelevator 4 gefüllt wird, steht dem Elevator 2 für den vertikalen Transport, die Übergabe der Produkte an eine Zwischenspeicherebene und die Rückkehr zur Verfügung. Dies stellt eine Vorpufferfunktion dar, welche eine Erhöhung der Arbeitskadenz des Elevators 2 und damit eine Vergrösserung des Produktdurchsatzes ermöglicht.

Wenn der Pufferelevator 4 gefüllt ist, kann dieser während des Abstands zwischen den ankommenden Produktgruppen ebenfalls einen vertikalen Transport durchführen und kommt dem Elevator 2 auf halber Hubhöhe entgegen. Durch diese Abfolge können die Hubhöhen bis auf die Hälfte reduziert werden, wodurch ebenfalls ein Zeitgewinn entsteht, der zu einer Erhöhung des Durchsatzes genutzt werden kann.

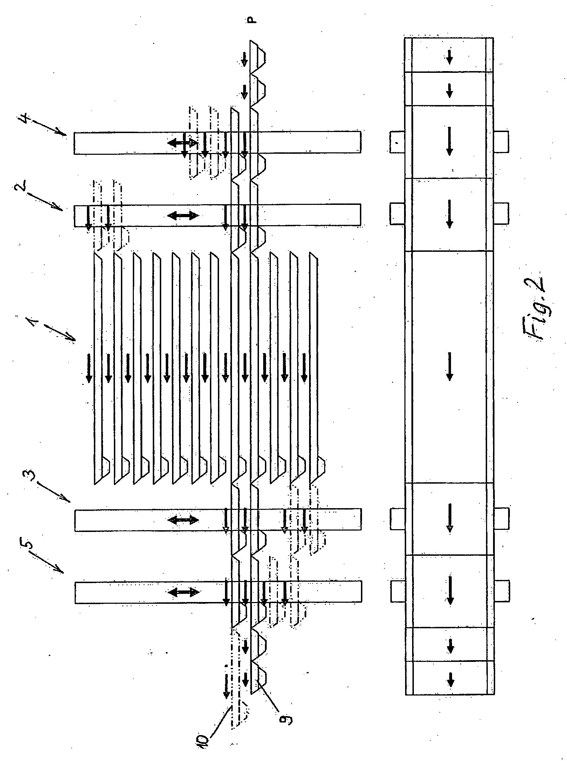

Eine weitere erhebliche Erhöhung des Durchsatzes wird durch die in Fig. 2 gezeigte Ausführungsform erzielt. Der Elevator 2 und der Pufferelevator 4 sind mit zwei übereinander angeordneten Bändern ausgestattet, wobei der vertikale Abstand der Bänder gleich dem der Bänder des Zwischenspeichers ist. Der Pufferelevator 4 übernimmt somit eine erste Produktmenge beispielsweise auf das obere seiner Bänder und unmittelbar danach eine zweite Produktmenge auf das untere Band. Die Reihenfolge ist unwichtig und kann auch umgekehrt sein. Die Zeit, die für die kurze vertikale Verschiebung benötigt wird, ist nahezu vernachlässigbar. Nach dem Füllen beider Ebenen werden die Produkte simultan an die beiden Ebenen des Elevators 2 übergeben, so dass der Pufferelevator 4 sofort wieder zur Produktübernahme zur Verfügung steht und der Elevator 2 Zeit für den Transport zu den Zwischenspeicherebenen hat, wo die beiden Ebenen entweder simultan auf zwei Ebenen oder nacheinander auf eine Ebene des Zwischenspeichers übergeben werden. Durch diese Erweiterung der Vorpufferfunktion ergibt sich ein zusätzlicher Zeitgewinn, der zur Erhöhung des Produktdurchsatzes genutzt werden kann.

Der Produktaustrag aus dem Zwischenspeicher erfolgt in gleicher Weise in umgekehrter Reihenfolge, d.h. zuerst aus einer oder zwei Ebenen des Zwischenspeichers auf die beiden Ebenen des auslaufseitigen Elevators 3, von diesem simultan auf die beiden Ebenen des Pufferelevators 5. Von dort können die Produkte nacheinander auf einer Ebene an weiterführende Förderbänder 9 übergeben werden.

Alternativ können die Produkte simultan auf zwei Ebenen an mehrere weiterführende Bänder 9, 10 übergeben werden, die zwei Verpackungseinrichtungen simultan oder zeitlich abgestuft mit Produktformationen beschicken, indem der auslaufseitige Pufferelevator 5 die den jeweiligen Verpackungslinien zugeordneten Entladeebenen anfährt und mittels der auf dem Elevator 5 befindlichen Fördereinrichtungen die entsprechenden Verpackungslinien mit Produkt bedient.

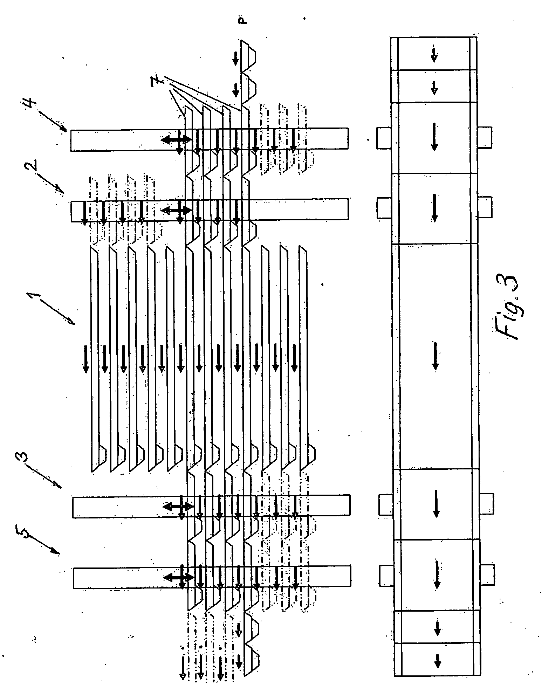

Zur weiteren Beschleunigung des Eintrags in den Zwischenspeicher und des Austrags aus demselben kann die Anzahl der Ebenen der Elevatoren auf drei, vier oder mehr erweitert werden, wie in Fig. 3 gezeigt. Der Ablauf des Füllens der einzelnen Ebenen ist gleich wie bei zwei Ebenen. Durch die Erweiterung auf mehrere Ebenen ergibt sich eine um ein Vielfaches verkürzte Übergabezeit der Produkte in den Zwischenspeicher (entsprechend für den Austrag) und somit eine Multiplikation des Durchsatzes.

Die Vorpufferfunktion ist also ausbaubar (berechenbar) durch eine beliebige Anzahl von übereinander angeordneten Förderern frei wählbarer Länge. Die Summe der Länge dieser auf dem Pufferelevator 3 befindlichen Förderer ergibt über die einlaufende Förderleistung bzw. -geschwindigkeit mindestens die notwendige Zeit, damit der vorgängig beschriebene Arbeitszyklus des Elevators 2 zur Beschickung der Pufferebenen bei kontinuierlich einlaufender Produktion stattfinden kann. Hierbei kann die Bandlänge der Pufferelevatoren kurz gehalten werden, um die Übernahmezeit und die Abgabezeit zu minimieren. Durch die Multiplikation der als Vorpufferförderer dienenden, übereinander angeordneten Ebenen im Pufferelevator 3 kann deren Länge zur Ermittlung der Vorpufferzeit addiert werden, um somit bei minimaler Länge die notwendige Zykluszeit für das Lastspiel des Elevators 2 zu erzeugen. Durch die simultane Übernahme und Abgabe der Produktformationen der übereinander liegenden Förderer im Pufferelevator 3 ergibt sich die dafür benötigte Zeit nur aus der Länge des einzelnen Förderers.

Durch die Anordnung mehrerer Pufferebenen übereinander ist es auch möglich, gleichzeitig Produkte von mehreren übereinander angeordneten Einlaufebenen, z.B. von mehreren Produktionslinien, zu übernehmen. Ausgangsseitig können, wie bereits erwähnt, ebenso gleichzeitig mehrere Auslaufebenen beschickt werden, um beispielsweise je nach Verfügbarkeit und Leistung mehrere Verpackungslinien mit Produkt zu bedienen.

Die Bildung der Formationen und der Abstände zwischen ihnen wird in bekannter Weise durch geeignete vorgeschaltete Förderer und deren elektrische Steuerung (Servotechnik) übernommen. Diese Formationen können beispielsweise durch eine berechenbare Anzahl Förderer mit einer berechneten Länge erzeugt werden. Bei höheren Leistungen kommt dann meistens ein durch Stand der Technik bekanntes Doppelpullnoseband zum Einsatz.

Wie bereits für zwei Elevatorebenen beschrieben können beim Produktaustrag mehrere Verpackungseinrichtungen simultan oder zeitlich abgestuft mit Produktformationen beschickt werden. Hierbei können einzelne Verpackungslinien auch gestoppt sein. Dann werden nur die Entladeebenen mit Produkt beschickt die auch aktiv sind und Produkt benötigen. Typischerweise ist die gesamte Auslaufleistung d. h. die Beschickungsleistung aller nachgeschalteten Verpackungsmaschinen um z. B. 10%- 20% grösser als die Produktionsleistung. Diese Überleistung ist mit der Menge des in den Pufferebenen befindlichen Produkts (Füllstand) gekoppelt. D. h. je höher der Füllgrad der Pufferebenen, desto höher wird die Auslaufleistung angesteuert, um ein Überfüllen der Pufferebenen zu verhindern. Somit reagiert der Produktfluss-Regulator flexibel auf die Verfügbarkeit des nachgeschalteten Verpackungsprozesses.

Ein weiterer Vorteil des erfindungsgemässen Regulators besteht darin, dass durch die übereinander liegende Anordnung mehrerer Ebenen auf den Elevatoren das Gesamtsystem in der Länge sehr kompakt aufgestellt werden kann.

Das beschriebene Ausführungsbeispiel ist eine Einrichtung für eine Produktionsanlage für unverpackte Produkte, für die sich vorzugsweise Förderbänder eignen. Der erfindungsgemässe Produktflussregulator ist aber selbstverständlich auch für andere, insbesondere auch verpackte, Produkte (Kartons, Pakete etc.) geeignet. Dafür können anstelle von Förderbändern auch andere Förderer, wie z.B. Rollenbahnen, Kettenförderer etc. eingesetzt werden.

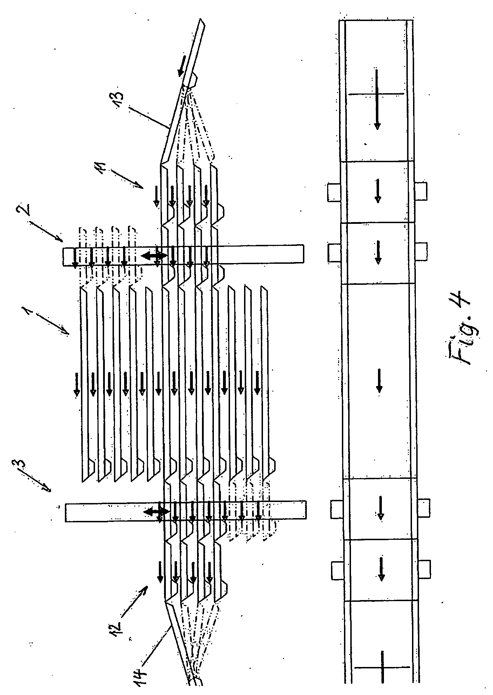

Beim beschriebenen bevorzugten Ausführungsbeispiel wird die Pufferfunktion durch die Pufferelevatoren 4, 5 wahrgenommen. Anstelle von,Elevatoren für die Pufferfunktion können, wie in Fig. 4 gezeigt, auch in der Höhe ortsfeste Puf-. fereinrichtungen 11, 12 eingesetzt werden. Wenn diese Puffereinrichtungen mehrere übereinander angeordnete Ebenen aufweisen, kann die Beschickung und/oder Entleerung mittels höhenverstellbarer Weichenbänder bzw. -förderer 13, 14 erfolgen.

Der beschrieben Produktfluss-Regulator kann so angeordnet sein, dass der Produktionsfluss durch ihn hindurch läuft (Inline-Anordnung). Bei dieser Anordnung erfolgt die Produkthandhabung nach dem Prinzip "first in first out" (FIFO). Alternativ gibt es die sog. "end of line"-Anordnung, d. h. der Produktfluss-Regulator steht am Lini.enende und die Produkthandhabung erfolgt nach dem Prinzip "first in last out" (FILO).

## Patentansprüche

1. Verfahren zum Entkoppeln eines ankommenden Flusses von Stückgutprodukten von einer nachgeordneten Einrichtung zur weiteren Behandlung mit einem feststehenden Zwischenspeicher (1) mit einer Vielzahl von Speicherebenen (6) und mit einem einlaufseitigen Elevator (2) mit einer oder mehreren Transportebenen zur Übernahme der auf Förderern (8) ankommenden Produkte in den Zwischenspeicher (1) und einem auslaufseitigen Elevator (3) zur Entnahme der zwischengespeicherten Produkte und deren Abgabe an weiterführende Förderer (9), **dadurch gekennzeichnet dass** dem einlaufseitigen Elevator (2) eine Puffereinrichtung (4; 11) vorgeschaltet wird, die ankommende Produkte übernimmt und auf mehreren unterschiedlichen Höhen an den einlaufseitigen Elevator (2) übergibt.

2. Verfahren nach Anspruch 1, **dadurch gekennzeichnet, dass** dem auslaufseitigen Elevator (3) eine Puffereinrichtung (5; 12) nachgeschaltet wird, die aus dem Zwischenspeicher entnommene Produkte auf mehreren unterschiedlichen Höhen vom auslaufseitigen Elevator (3) übernimmt und an die weiterführenden Förderer (9; 10) abgibt.

3. Verfahren nach einem der Ansprüche 1-2, **dadurch gekennzeichnet, dass** einlaufseitig mehrere Transportebenen der Puffereinrichtung (4; 11) nacheinander gefüllt und die Produkte simultan an den nachgeordneten Elevator (2) übergeben werden.

4. Verfahren nach Anspruch 2, **dadurch gekennzeichnet, dass** mehrere Transportebenen des auslaufseitigen Elevators (3) simultan aus dem Zwischenspeicher (1) gefüllt und simultan an mehrere Transportebenen der nachgeordneten Puffereinrichtung (5; 12) übergeben werden und danach die Produkte von den einzelnen Transportebenen der Puffereinrichtung (5; 12) nacheinander oder simultan an die weiterführenden Förderer (9; 10) abgegeben werden.

5. Verfahren nach Anspruch 2, **dadurch gekennzeichnet, dass** mehrere Transportebenen des auslaufseitigen Elevators (3) simultan aus dem Zwischenspeicher (1) gefüllt und simultan an mehrere Ebenen der nachgeordneten Puffereinrichtung (5; 12) übergeben werden und danach die Produkte von den einzelnen Transportebenen der Puffereinrichtung (5; 12) simultan an mehrere weiterführende Förderer (9; 10) abgegeben werden.

6. Produktfluss-Regulator zum Entkoppeln eines ankommenden Flusses von Stückgutprodukten von einer nachgeordneten Einrichtung zur weiteren Behandlung mit einem feststehenden Zwischenspeicher (1) mit einer Vielzahl von Speicherebenen (6) und mit einem einlaufseitigen Elevator (2) mit einer oder mehreren Transportebenen zur Übernahme der auf Förderern (8) ankommenden Produkte in den Zwischenspeicher (1) und einem auslaufseitigen Elevator (3) zur Entnahme der zwischengespeicherten Produkte und deren Abgabe an weiterführende Förderer (9; 10), **gekennzeichnet durch** eine dem einlaufseitigen Elevator (2) vorgeschaltete Puffereinrichtung (4; 11) zur Übernahme ankommender Produkte und zur Übergabe an den einlaufseitigen Elevator (2) auf mehreren unterschiedlichen Höhen.

7. Produktfluss-Regulator nach Anspruch 6, **gekennzeichnet durch** eine dem auslaufseitigen Elevator (3) nachgeschaltete Puffereinrichtung (5; 12) zur Übernahme aus dem Zwischenspeicher (1) entnommener Produkte vom auslaufseitigen Elevator (3) auf mehreren unterschiedlichen Höhen und zur Übergabe an die weiterführenden Förderer (9; 10).

8. Produktfluss-Regulator nach einem der Ansprüche 6-7, **dadurch gekennzeichnet, dass** die dem einlaufseitigen Elevator (2) vorgeschaltete Puffereinrichtung (4) ein Elevator ist.

9. Produktfluss-Regulator nach einem der Ansprüche 6-8, **dadurch gekennzeichnet, dass** die dem einlaufseitigen Elevator (2) vorgeschaltete Puffereinrichtung (11) mehrere in der Höhe ortsfeste Ebenen und eine Verteileinrichtung (13) umfasst, wobei die Produkte mittels der Verteileinrichtung (13) von den Förderern (8) auf die mehreren in der Höhe ortsfesten Ebenen verteilbar sind.

10. Produktfluss-Regulator nach einem der Ansprüche 7-9, **dadurch gekennzeichnet, dass** die dem auslaufseitigen Elevator (3) nachgeschaltete Puffereinrichtung (5) ein Elevator ist.

11. Produktfluss-Regulator nach einem der Ansprüche 7-10, **dadurch gekennzeichnet, dass** die dem auslaufseitigen Elevator (3) nachgeschaltete Puffereinrichtung(12) in der Höhe ortsfeste Ebenen und eine Verteileinrichtung umfasst, wobei die Produkte mittels der Verteileinrichtung von den mehreren in der Höhe ortsfesten Ebenen auf die weiterführenden Förderer (9; 10) verteilbar sind.

12. Produktfluss-Regulator nach einem der Ansprüche 6-11, **dadurch gekennzeichnet, dass** die Elevatoren (2,3) und die Puffereinrichtungen (4, 5) eine oder mehrere übereinander angeordnete Transportebenen besitzen.

## Claims

1. A method for decoupling an incoming flow of cargo products from a downstream device for further treatment, with a fixed temporary storage (1) having a plurality of storage levels (6) and having an inlet-side elevator (2) with one or more transport levels for accepting the products arriving on conveyors (8) into the temporary storage (1) and an outlet-side elevator (3) for removing the temporarily stored products and handing them over to further conveyors (9), **characterised in that** a buffer means (4; 11) is connected upstream of the inlet-side elevator (2), the buffer means accepting incoming goods and handing them over to the inlet-side elevator (2) at several different heights.

2. The method as claimed in claim 1, **characterised in that** a buffer means (5; 12) is connected downstream of the outlet-side elevator (3), the buffer means accepting products from the outlet-side elevator (3) taken from the temporary storage at several different heights and handing them over to the further conveyors (9; 10).

3. The method as claimed in one of claims 1-2, **characterised in that** at the inlet side, several transport levels of the buffer means (4; 11) are filled one after the other and the products are simultaneously handed over to the downstream elevator (2).

4. The method as claimed in claim 2, **characterised in that** several transport levels of the outlet-side elevator (3) are simultaneously filled from the temporary storage (1) and are simultaneously handed over to several transport levels of the downstream buffer means (5; 12) and the products are afterwards consecutively or simultaneously handed over from the individual transport levels of the buffer means (5; 12) to the further conveyors (9; 10).

5. The method as claimed in claim 2, **characterised in that** several transport levels of the outlet-side elevator (3) are simultaneously filled from the temporary storage (1) and are simultaneously handed over to several levels of the downstream buffer means (5; 12) and the products are afterwards simultaneously handed over from the individual transport levels of the buffer means (5; 12) to several further conveyors (9; 10).

6. A product flow regulator for decoupling an incoming flow of cargo products from a downstream device for further treatment, with a fixed temporary storage (1) having a plurality of storage levels (6) and having an inlet-side elevator (2) with one or more transport levels for transferring the products arriving on conveyors (8) to the temporary storage (1) and an outlet-side elevator (3) for removing the temporarily stored products and handing them over to further conveyors (9, 10), **characterised by** a buffer means (4; 11) connected upstream of the inlet-side elevator (2) for accepting incoming goods and for handing them over to the inlet-side elevator (2) at several different heights.

7. The product flow regulator as claimed in claim 6, **characterised by** a buffer means (5; 12) connected downstream of the outlet-side elevator (3) for accepting products from the outlet-side elevator (3) taken from the temporary storage (1) at several different heights and for handing them over to the further conveyors (9; 10).

8. The product flow regulator as claimed in one of claims 6-7, **characterised in that** the buffer means (4) connected upstream of the inlet-side elevator (2) is an elevator.

9. The product flow regulator as claimed in one of claims 6-8, **characterised in that** the buffer means (11) connected upstream of the inlet-side elevator (2) comprises several levels fixed aloft and one distribution device (13), wherein the products can be distributed from the conveyors (8) to the several levels fixed aloft by means of the distribution device (13).

10. The product flow regulator as claimed in one of claims 7-9, **characterised in that** the buffer means (5) connected downstream of the outlet-side elevator (3) is an elevator.

11. The product flow regulator as claimed in one of claims 7-10, **characterised in that** the buffer means (12) connected downstream of the outlet-side elevator (3) comprises levels fixed aloft and one distribution device, wherein the products can be distributed from the several levels fixed aloft to the further conveyors (9; 10) by means of the distribution device.

12. The product flow regulator as claimed in one of claims 6-11, **characterised in that** the elevators (2, 3) and the buffer means (4, 5) have one or more transport levels arranged one above the other.

## Revendications

1. Procédé de désaccouplement d'un flux de marchandises par rapport à un dispositif installé en aval pour un traitement ultérieur, avec un espace de stockage intermédiaire fixe (1) comprenant une pluralité de niveaux de stockage (6) et un élévateur côté entrée (2) comprenant un ou plusieurs niveaux de transport destinés à transférer les produits arrivant sur des convoyeurs (8) vers l'espace de stockage intermédiaire (1), et un élévateur côté sortie (3) pour le retrait des produits stockés temporairement et la remise de ceux-ci à des convoyeurs complémentaires (9), **caractérisé en ce que** l'élévateur côté entrée (2) est précédé d'un dispositif d'amortissement (4 ; 11) recevant des produits entrants et remettant ceux-ci à l'élévateur côté entrée (2) à plusieurs hauteurs différentes.

2. Procédé selon la revendication 1, **caractérisé en ce que** l'élévateur côté sortie (3) est suivi d'un dispositif d'amortissement (5 ; 12) récupérant des produits retirés de l'espace de stockage intermédiaire auprès de l'élévateur côté sortie (3) à plusieurs hauteurs différentes et confiant ceux-ci aux convoyeurs complémentaires (9 ; 10).

3. Procédé selon l'une des revendications 1-2, **caractérisé en ce que** côté entrée, plusieurs niveaux de transport du dispositif d'amortissement (4 ; 11) sont remplis consécutivement et les produits sont confiés simultanément à l'élévateur en aval (2).

4. Procédé selon la revendication 2, **caractérisé en ce que** plusieurs niveaux de transport de l'élévateur côté sortie (3) sont remplis simultanément à partir de l'espace de stockage intermédiaire (1) et transférés simultanément vers plusieurs niveaux de transport du dispositif d'amortissement en aval (5 ; 12), puis les produits sont confiés consécutivement ou simultanément aux convoyeurs complémentaires (9 ; 10) à partir des différents niveaux de transport du dispositif d'amortissement (5 ; 12).

5. Procédé selon la revendication 2, **caractérisé en ce que** plusieurs niveaux de transport de l'élévateur côté sortie (3) sont remplis simultanément à partir de l'espace de stockage intermédiaire (1) et transférés simultanément vers plusieurs niveaux du dispositif d'amortissement en aval (5 ; 12), puis les produits sont confiés simultanément à plusieurs convoyeurs complémentaires (9 ; 10) à partir des différents niveaux de transport du dispositif d'amortissement (5 ; 12).

6. Régulateur de flux de produits pour le désaccouplement d'un flux de marchandises par rapport à un dispositif installé en aval pour un traitement ultérieur, avec un espace de stockage intermédiaire (1) fixe comprenant une pluralité de niveaux de stockage (6) et un élévateur côté entrée (2) comprenant un ou plusieurs niveaux de transport destinés à transférer les produits arrivant sur des convoyeurs (8) vers l'espace de stockage intermédiaire (1), et un élévateur côté sortie (3) pour le retrait des produits stockés temporairement et la remise de ceux-ci à des convoyeurs complémentaires (9 ; 10), **caractérisé par** un dispositif d'amortissement (4 ; 11) disposé en amont de l'élévateur côté entrée (2) pour la réception de produits entrants et la remise de ceux-ci à l'élévateur côté entrée (2) à plusieurs hauteurs différentes.

7. Régulateur de flux de produits selon la revendication 6, **caractérisé par** un dispositif d'amortissement (5 ; 12) disposé en aval de l'élévateur côté sortie (3), lequel est destiné à récupérer des produits retirés de l'espace de stockage intermédiaire auprès de l'élévateur côté sortie (3) à plusieurs hauteurs différentes et à confier ceux-ci aux convoyeurs complémentaires (9 ; 10).

8. Régulateur de flux selon l'une des revendications 6-7, **caractérisé en ce que** le dispositif d'amortissement (4) disposé en amont de l'élévateur côté entrée (2) est un élévateur.

9. Régulateur de flux selon l'une des revendications 6-8, **caractérisé en ce que** le dispositif d'amortissement (11) disposé en amont de l'élévateur côté entrée (2) comprend plusieurs niveaux fixes en hauteur et un dispositif de répartition (13), les produits pouvant être répartis sur les différents niveaux fixes en hauteur à partir des convoyeurs (8) à l'aide du dispositif de répartition (13).

10. Régulateur de flux selon l'une des revendications 7-9, **caractérisé en ce que** le dispositif d'amortissement (5) monté en aval de l'élévateur côté sortie (3) est un élévateur.

11. Régulateur de flux selon l'une des revendications 7-10, **caractérisé en ce que** le dispositif d'amortissement (12) disposé en aval de l'élévateur côté sortie (3) comprend des niveaux fixes en hauteur et un dispositif de répartition, les produits pouvant être répartis sur les convoyeurs complémentaires (9 ; 10) à partir des différents niveaux fixes en hauteur à l'aide du dispositif de répartition.

12. Régulateur de flux selon l'une des revendications 6-11, **caractérisé en ce que** les élévateurs (2, 3) et les dispositifs d'amortissement (4, 5) comportent un ou plusieurs niveaux de transport superposés.
